# EUROPEAN PATENT APPLICATION

(11) **EP 2 886 908 A1**
(43) Date of publication of application: **24.06.2015**
(21) Application number: 13306790.0
(22) Date of filing: 19.12.2013
(51) Int. Cl.: F16H 25/20, F16C 29/12

(54) **Anti-rotation device for actuators**

(71) Applicant: Aktiebolaget SKF, 41 550 Göteborg (SE)
(72) Inventor: Lecluse, Sebastien, 74540 Gruffy (FR); Boch, Christian, 73000 Chambery (FR); Dubus, Jerome, 37520 LA RICHE (FR); Grove, Frans, Chalfont, PA Pennsylvania 18914 (US); Lee, Marcus, Houston, TX Texas 77095 (US); Chandila, Parveen K., Tomball, TX Texas 77377 (US)
(74) Representative: Kohl, Thomas

(57) **Abstract**

An anti-rotation device prevents relative rotation between first and second members (1, 2), one member being telescopingly disposed about the other and at least one member being linearly displaceable along a central axis. First and second guide surfaces (12, 14) are provided on the first member and extend generally parallel with each other and the central axis. First and second rollers (16, 18) are connected with the second member and are each rotatable about an adjustably fixed axis on the second member. The first roller is rollable along the first guide surface to prevent angular displacement between the two members when the displaceable member moves in a first direction and the second roller is rollable along the second guide surface to prevent angular displacement between the two members when the displaceable member moves in an opposing direction. The contact between the rollers and guide surfaces provide a radial degree of freedom to the anti-rotation device.

## Description

### BACKGROUND OF THE INVENTION

The present invention relates to actuators, and more particularly to anti-rotation devices for linear actuators.

Certain linear actuators include first and second members (e.g., tubes, rods, etc.) in which one member is telescopingly disposed within the other member. Often, a motor driven power screw drives a nut coupled with one of the two members so as to cause the connected member to slidingly displace relative to the other member. When the nut is restrained from rotating and only displaces linearly along the screw, a torque is exerted on the nut which tends to angularly bias the member coupled with the nut relative to the other member. Thus, this torque must be counteracted or the displaceable member may bind within the other member, or at least cause premature wear on contacting surfaces of the two actuator members.

One known approach to resist the torque applied to the nut is to provide an elongated rectangular bar mounted on one actuator member and a pair of rails connected with the other actuator member and disposed on opposing sides of the rectangular bar, either of which may include anti-friction pads. The rails slide along contacting surfaces of the bar and effectively prevent rotation, but may have undesired wear on the contacting surfaces of the rails and/or the bar. Another known approach is provide a device that has an elongated bar connected with one actuator member and two recirculating linear ball bearings disposed on each side of the bar. The balls roll along grooves on each side of the bar, which reduces friction substantially in comparison with rails sliding against surfaces of the bar. However, excessive dimensional variations between the two actuator members due to overlarge manufacturing tolerances may cause the balls to jam within the associated grooves and lead to premature wear or even prevent relative displacement of the actuator members.

### SUMMARY OF THE INVENTION

In one aspect, the present invention is an anti-rotation device for preventing relative rotation between first and second members. One of the first and second members is telescopingly disposed about the other one of the first and second members and at least one of the two members is linearly displaceable along a central axis extending through each of the two members. The anti-rotation device basically comprises first and second guide surfaces provided on the first member, the two guide surfaces extending generally parallel with each other and with the central axis. At least one first roller is connected with the second member and is rotatable about an axis located at a fixed position on the second member. The first roller is rollable along the first guide surface so as to prevent angular displacement between the first and second members when the displaceable one of the two members moves in a first direction along the axis. At least one second roller is connected with the second member and is rotatable about an axis located at a fixed position on the second member. The second roller is rollable along the second guide surface so as to prevent angular displacement between the first and second members when the displaceable one of the two members moves in a second, opposing direction along the axis.

In another aspect, the present invention is again an anti-rotation device for preventing relative rotation between first and second members. One of the first and second members is telescopingly disposed about the other one of the first and second members and at least one of the two members is linearly displaceable along a central axis extending through each of the two members. The anti-rotation device comprises first and second guide surfaces provided on the first member, the two guide surfaces extending generally parallel with each other and with the central axis. At least one first roller is disposed generally between the first and second guide surfaces, is connected with the second member and is rotatable about an axis located at a fixed position on the second member. The first roller is rollable along the first guide surface so as to prevent angular displacement between the first and second members when the displaceable one of the two members moves in a first direction along the axis. Further, the first roller is adjustably mounted on the second member such that the position of the first roller axis on the second member is variable to adjust a spacing distance between the first roller axis and the first guide surface. At least one second roller is disposed generally between the first and second guide surfaces, is connected with the second member and is rotatable about an axis located at a fixed position on the second member. The second roller is rollable along the second guide surface so as to prevent angular displacement between the first and second members when the displaceable one of the two members moves in a second, opposing direction along the axis.

In yet another aspect, the present invention is an assembly comprising first and second members and an anti-rotation device for preventing relative rotation between first and second members. One of the first and second members is telescopingly disposed about the other one of the first and second members and at least one of the two members is linearly displaceable along a central axis extending through each of the two members. The anti-rotation device includes first and second guide surfaces provided on the first member, the two guide surfaces extending generally parallel with each other and with the central axis. At least one first roller is connected with the second member and is rotatable about an axis located at a fixed position on the second member. The first roller is rollable along the first guide surface so as to prevent angular displacement between the first and second members when the displaceable one of the two members moves in a first direction along the axis. Further, at least one second roller is connected with the second member and rotatable about an axis located at a fixed position on the second member, the second roller being rollable along the second guide surface so as to prevent angular displacement between the first and second members when the displaceable one of the two members moves in a second, opposing direction along the axis.

### BRIEF DESCRIPTION OF THE SEVERAL VIEWS OF THE DRAWINGS

The foregoing summary, as well as the detailed description of the preferred embodiments of the present invention, will be better understood when read in conjunction with the appended drawings. For the purpose of illustrating the invention, there is shown in the drawings, which are diagrammatic, embodiments that are presently preferred. It should be understood, however, that the present invention is not limited to the precise arrangements and instrumentalities shown. In the drawings:
Fig. 1 is an axial cross-sectional view of a linear screw actuator with an anti-rotation device in accordance with the present invention, showing a piston moving from a first position toward a second position;
Fig. 2 is another axial cross-sectional view of the linear screw actuator and anti-rotation device of Fig. 1, showing the piston moving from the second position toward the first position;
Fig. 3 is broken-away, enlarged view of a portion of Fig. 1;
Fig. 4 is broken-away, enlarged view of a portion of Fig. 2;
Fig. 5 is a more diagrammatic, top plan view of the anti-rotation device, shown without a first member and showing a second member in phantom at the first position;
Fig. 6 is another more diagrammatic top plan view of the anti-rotation device, shown again without the first member and showing the second member in phantom at the second position;
Fig. 7 is a broken-away, more enlarged view of a portion of Fig. 1, showing the details of anti-rotation device and a nut of the screw actuator;
Fig. 8 is an enlarged, more diagrammatic top plan view of the anti-rotation device, showing four preferred rollers and sections of first and second guide surfaces;
Fig. 9 is a more enlarged view of a portion of Fig. 8, showing two of the rollers and sections of the two guide surfaces;
Fig. 10 is an even more diagrammatic view of a single roller disposed between sections of the two guide surfaces in which the guide surfaces are spaced by a first distance;
Fig. 11 is another even more diagrammatic view of a single roller disposed between sections of the two guide surfaces in which the guide surfaces are spaced by a second, lesser distance;
Fig. 12 is an axial cross-sectional view of a roller;
Fig. 13 is an exploded axial cross-sectional view of the roller of Fig. 12, shown with a portion of a base member broken-away and without a bolt;
Fig. 14 is a radial cross-sectional view through line 14-14 of Fig. 12;
Fig. 15 is a side elevational view of a coupler of the preferred roller;
Fig. 16 is a radial cross-sectional view through line 16-16 of Fig. 15;
Fig. 17 is a radial cross-sectional view through line 17-17 of Fig. 5;
Fig. 18 is a radial cross-sectional view through line 18-18 of Fig. 6;
Fig. 19 is a bottom perspective view a preferred anti-rotation device, shown with a preferred guide assembly separate from the first member and the rollers unattached from the second member; and
Fig. 20 is a top perspective view of the anti-rotation device as shown in Fig. 19.

### DETAILED DESCRIPTION OF THE INVENTION

Certain terminology is used in the following description for convenience only and is not limiting. The words "inner", "inwardly" and "outer", "outwardly" refer to directions toward and away from, respectively, a designated centerline or a geometric center of an element being described, the particular meaning being readily apparent from the context of the description. Further, as used herein, the words "connected" and "coupled" are each intended to include direct connections between two members without any other members interposed therebetween and indirect connections between members in which one or more other members are interposed therebetween. The terminology includes the words specifically mentioned above, derivatives thereof, and words of similar import.

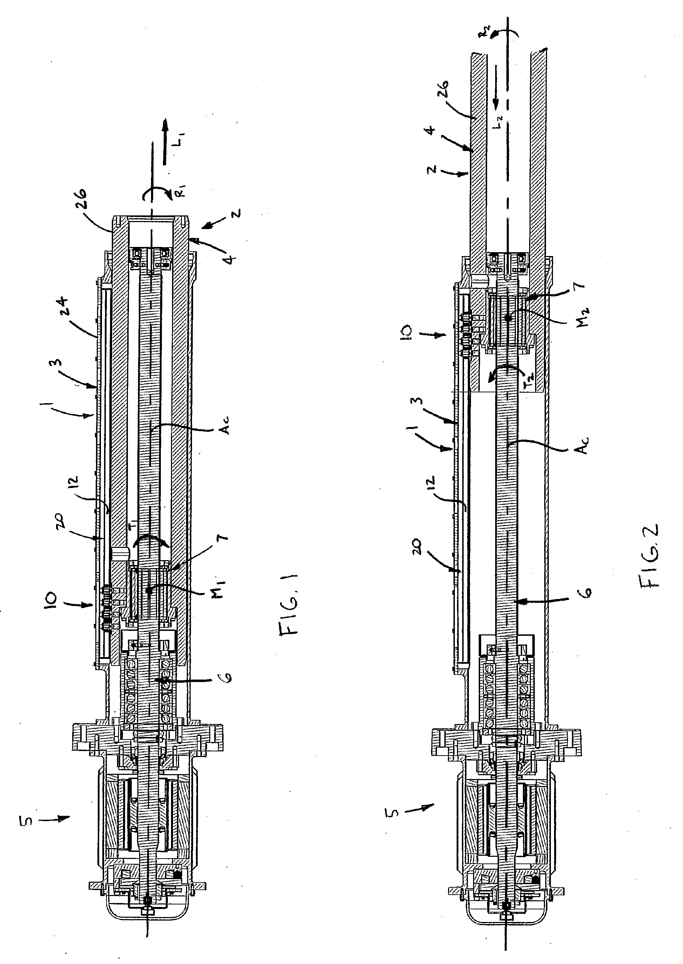

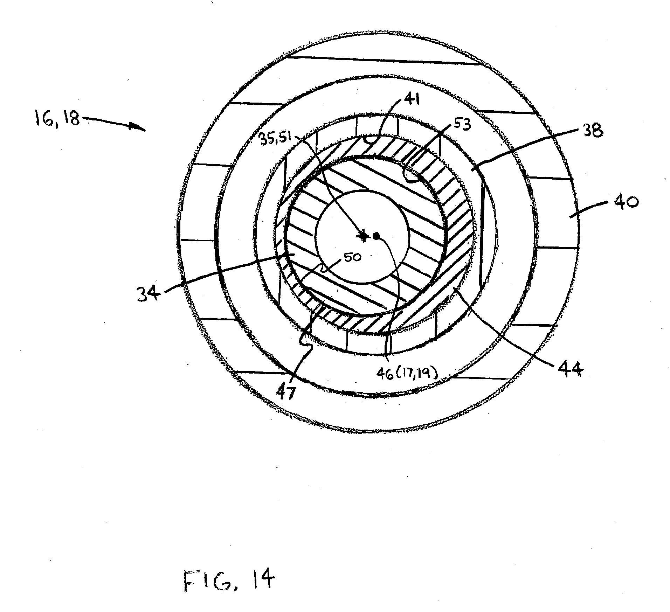

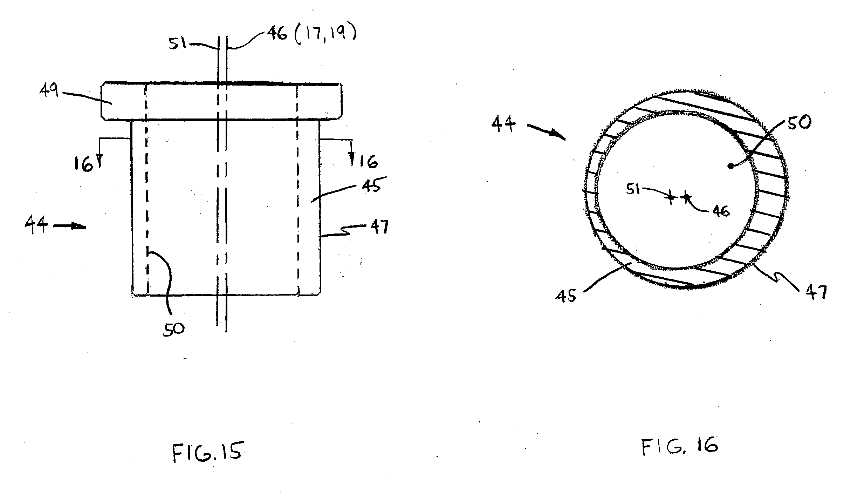

Referring now to the drawings in detail, wherein like numbers are used to indicate like elements throughout, there is shown in Figs. 1-20 an anti-rotation device 10 for preventing relative rotation between first and second members 1, 2, respectively. One of the first and second members 1, 2 is telescopingly disposed about the other one of the first and second members 2, 1 and at least one of the two members 1, 2 is linearly displaceable along a central axis A_{C} extending through each of the two members 1, 2. In a presently preferred construction, the first member 1 is an outer, generally tubular member 3 and the second member 2 is an inner member 4 disposed coaxially within the first, outer member 1 and movable along the axis A_{C}. Alternatively, the second member 2 may be the outer, generally tubular member and the first member 1 may be disposed coaxially within the second member 2 (alternative structure not shown), with either or both members 1, 2 being movable relative to the other member 1, 2.

In any arrangement, the anti-rotation device 10 basically comprises first and second guide surfaces 12, 14 provided on the first member 1, at least one first roller 16 and at least one second roller 18, each roller 16, 18 being connected with the second member 2. The two guide surfaces 12, 14 extend generally parallel with each other and with the central axis A_{C}. Preferably, the guide surfaces 12, 14 are provided by first and second spaced-apart, generally rectangular rails 20, 22 connected with the first member 1 so as to extend generally parallel to the axis A_{C}. The at least one first roller 16 has an outside diameter D₁ and is rotatable about an axis 17 located at a fixed position P_{1*X*} on the second member 2, in contrast to rollers (e.g., balls) that are linearly displaceable relative to a member to which they are coupled (structure not shown). That is, the roller axis 17 remains at a specific position P_{1*X*} on the second member 2 during use of the anti-rotation device 10, but the roller 16 is preferably adjustably mounted as described below.

Further, each first roller 16 is rollable along the first guide surface 12 so as to prevent angular displacement between the first and second members 1, 2 when the displaceable one of the two members 1 or 2 moves in a first direction L₁ along the axis A_{C}, as depicted in Figs. 1, 3 and 5 and discussed below. Likewise, the at least one second roller 18 has an outside diameter D₂ and is rotatable about an axis 19 located at a fixed position P_{2*X*} on the second member 2, which is also preferably adjustable as discussed below. Each second roller 18 is rollable along the second guide surface 14 so as to prevent angular displacement between the first and second members 1, 2 when the displaceable member 1 or 2 moves in a second, opposing direction L₂ along the axis A_{C}, as shown in Figs. 2, 4 and 6. Preferably the first and second rollers 16, 18 are disposed between the guide surfaces 12, 14, but may alternatively be located such that the two guide surfaces 12, 14 are disposed between the rollers 16, 18, as discussed in greater detail below.

It must be noted that, although the description and drawings primarily concern a construction in which the first member 1 is an outer member 3 upon which the guide surfaces 12, 14 are provided and the second member 2 is an inner member 4 to which the rollers 16, 18 are mounted, the focus on such a description and depiction is for convenience only. The scope of the present invention includes both this arrangement and also an arrangement in which the first member 1 is an inner member having the guide surfaces 12, 14 and the second member 2 is an outer member to which the rollers 16, 18 are connected (alternative arrangement not shown).

Referring to Figs. 1-5, in a presently preferred application, the two members 1, 2 are parts or components of a linear screw actuator 5. Specifically, one of the first and second members 1, 2, preferably the first, outer member 3, includes a generally tubular casing 24 configured to contain at least a portion of a screw 6 of the screw actuator 5 and the other one of the two members 1, 2, preferably the second, inner member 4, includes a generally tubular piston body 24 connected with a nut 7 of the screw actuator 5. Alternatively, the first member 1 may include the tubular piston 26 and the second member 2 may include the tubular casing 24.

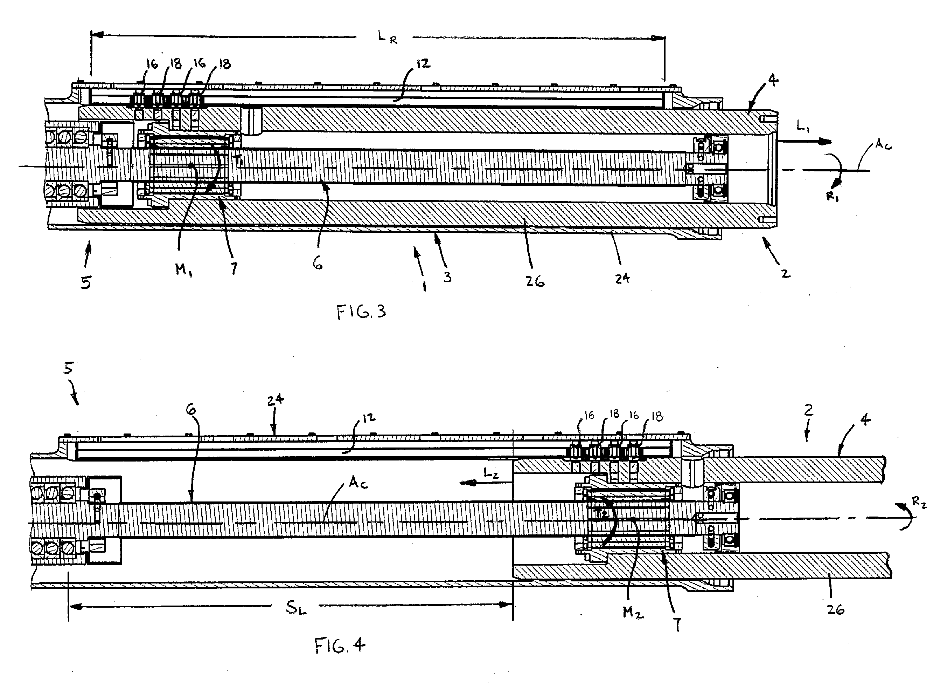

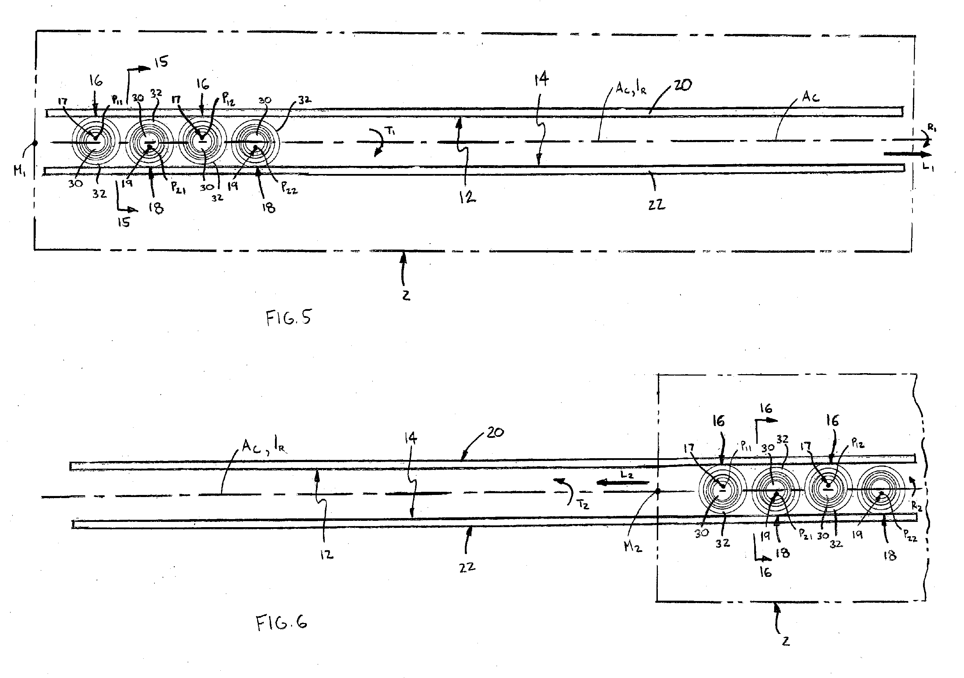

In either arrangement, the screw 6 exerts torque T₁ or T₂ on the nut 7 as the screw 6 rotates in opposing angular directions R₁, R₂ to linearly displace the nut 7 (and thus the tubular piston 26) in opposing linear directions L₁, L₂ along the central axis A_{C}. When the screw 6 drives the nut 7 and tubular piston 26 to displace in a first linear direction L₁ along the central axis A_{C} from a first position M₁ toward a second position M₂, a torque T₁ tends to bias the nut 7 and piston 26 in a first angular direction R₁, as shown in Figs. 3 and 5. However, angular displacement of the piston 26 in the first direction R₁ is prevented by contact between the one or more first rollers 16 and the first guide surface 12. Alternatively, when the screw 6 drives the nut 7 and the piston 26 in the second linear direction L₁ along the central axis A_{C} to displace from the second position M₂ toward the first position M₁, a torque T₂ tends to bias the nut 7 and the piston 26 in a second angular direction R₂, as depicted in Figs. 4 and 6. In this case, angular displacement of the piston 26 in the second direction R₂ is prevented by contact between the second roller(s) 18 and the second guide surface 14.

Referring now to Figs. 1-9, the at least one first roller 16 preferably includes a plurality of first rollers 16 spaced apart generally along the central axis A_{C}. Although two first rollers 16 are shown in the drawings and primarily described herein, the anti-rotation device 10 may alternatively include three or more rollers 16 (no alternatives shown). In any case, each first roller 16 is connected with the second member 2, is rotatable about a separate axis 17 located a discrete, fixed position P_{1*X*} (e.g., P₁₁, P₁₂, as depicted) on the second member 2 and is rollable along the first guide surface 12. Likewise, the at least one second roller 18 preferably includes a plurality of second rollers 18 (two depicted) spaced apart generally along the central axis A_{C}. Each second roller 18 is connected with the second member 2, is rotatable about a separate axis 19 located a discrete, fixed position P_{2*X*} (e.g., P₂₁, P₂₂, as shown) on the second member 2 and is rollable along the second guide surface 14.

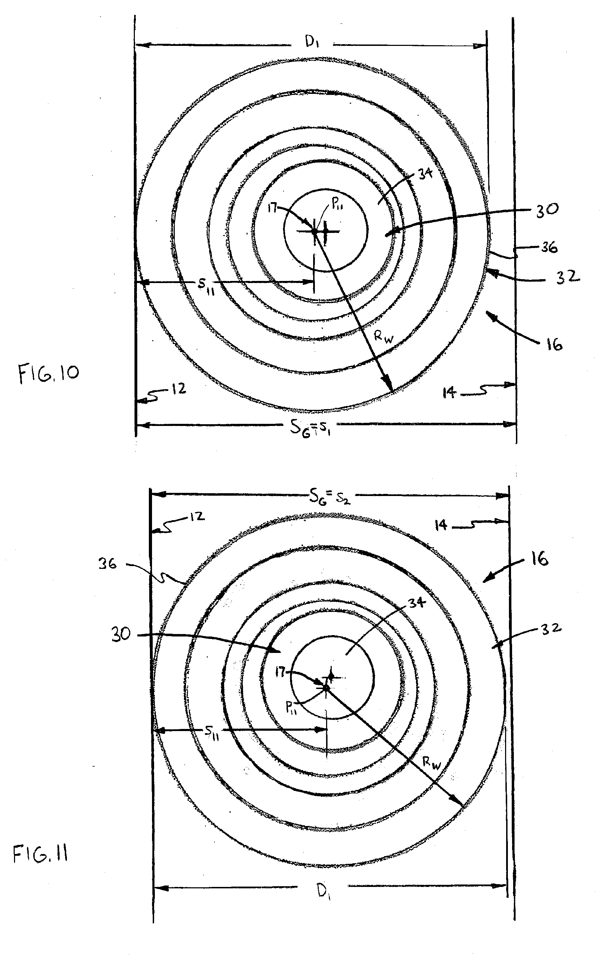

Preferably, as discussed above, each one of the plurality of first rollers 16, and most preferably also each one of the second rollers 18, is adjustably mounted on the second member 2 to permit adjustment of the contact between each roller 16, 18 and the associated guide surface 12, 14, respectively, as described in detail below. More specifically, the one or more first rollers 16 are each adjustably mounted on the second member 2 such that the position P_{1*X*} (i.e., P₁₁, P₁₂) of each first roller axis 17 on the second member 2 is variable to adjust a spacing distance s_{1*X*} between the first roller axis 17 and the first guide surface 12, as indicated in Figs. 10 and 11. Preferably, each first roller 16 is positioned such that the distance s_{1*X*} is equal to, or slightly less than, the radius R₁ of the roller 16, as discussed in greater detail below. Thus, when the first and second members 1, 2 are assembled together and the first rollers 16 are mounted on the second member 2, the position P_{1*X*} of each roller axis 17 can be adjusted or moved to ensure that each first roller 16 contacts the first guide surface 12 in a manner to permit free rolling motion along the surface 12 without excessive friction.

As depicted in Figs. 10 and 11, by being adjustably mounted, each first roller 16 is capable of adapting to variations in the spacing distance S_{G} between the guide surfaces 12, 14 of different anti-rotation devices 10 and/or different actuators 5. Fig. 10 shows an arrangement in which the spacing distance S_{G} between the guide surfaces 12, 14 has a first value s₁ and Fig. 11 shows an arrangement in which the spacing distance S_{G} has a second value s₂ that is lesser than the first spacing distance value s₁ (i.e., s₁ > s₂). As described in detail below, each first roller 16 can be adjusted to accommodate each value s₁, s₂ of the guide surface spacing distance S_{G} by adjusting the angular position P_{1*X*} of the roller axis 17 relative to a base centerline 35. Further, each one of the second rollers 18 is preferably also adjustably mounted on the second member 2 in a manner similar to the first rollers 16. As such, the position P_{2*X*} (i.e., P₂₁, P₂₂) of each second roller axis 19 on the second member 2 is variable to adjust a spacing distance s_{2*X*} (e.g., s₂₁, s₂₂) between the second roller axis 19 and the second guide surface 14.

Thus, the capability of adjusting the positions P_{1X}, P_{2X} of the roller axes 17, 19 enables the anti-rotation device 10 to adapt to variations resulting from manufacturing tolerances of the first and second members 1, 2, which otherwise could result in non-contact or binding between the rollers 16, 18 and the guide surfaces 12, 14. Having described the basic structure and functioning of the anti-rotation device 10 above, these and other components and features of the present invention are described in further detail below.

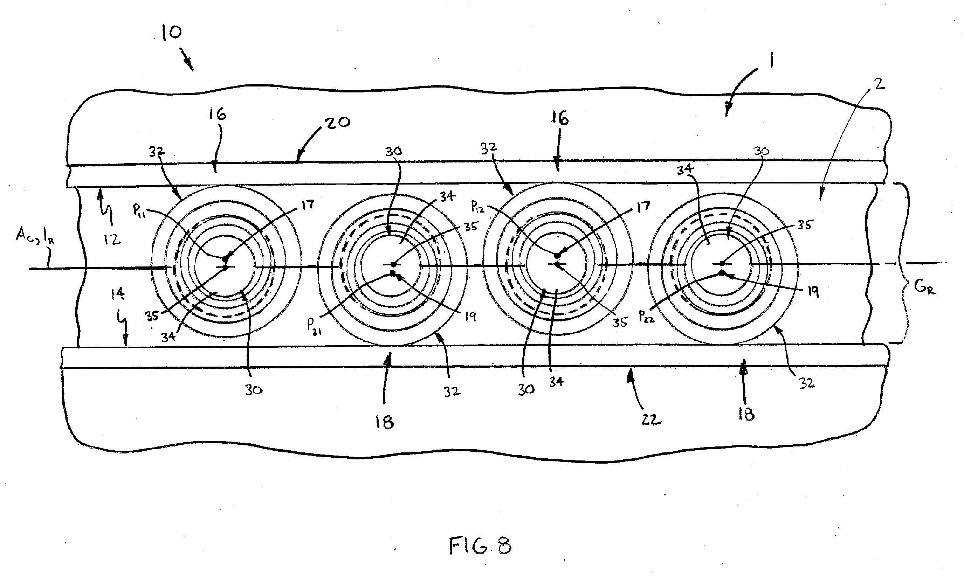

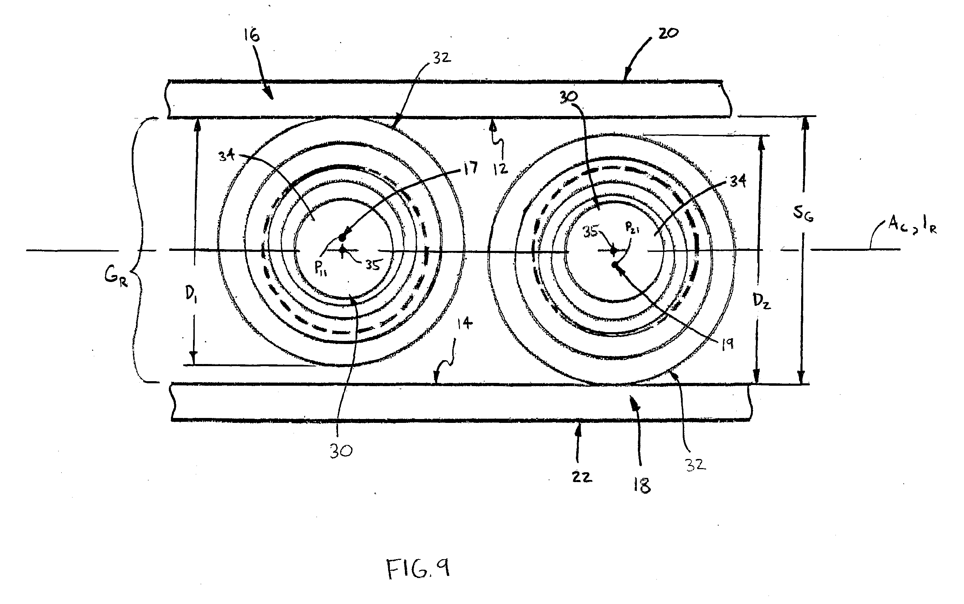

Referring to Figs. 5, 6, 8, 9 and 17-20, the first and second guide surfaces 12, 14 are preferably arranged on the first member 1 such that each surface 12, 14 generally faces the other one of the first and second guide surfaces 12, 14. With this arrangement, the at least one first roller 16 and the at least one second roller 18 are each disposed generally between the first and second guide surfaces 12, 14. Specifically, the guide surfaces 12, 14 are provided by facing surfaces of the preferred rectangular rails 20, 22, which are spaced apart to form an elongated gap G_{R} that extends along the central axis A_{C} and within which the rollers 16, 18 are at least partially disposed. Preferably, the first and second guide surfaces 12, 14, and thus the rails 20, 22, are spaced apart by a spacing distance S_{G} that is greater than the diameter D₁ of the first roller 16 and the diameter D₂ of the second roller 18, as indicated in Fig. 9. With this arrangement, the rollers 16, 18 are preferably positioned such that the first roller(s) 16 contact the first guide surface 12 and are spaced from the second guide surface 14 and the second roller(s) 18 contact the second guide surface 14 and are spaced from the first guide surface 12, as best shown in Figs. 8 and 9.

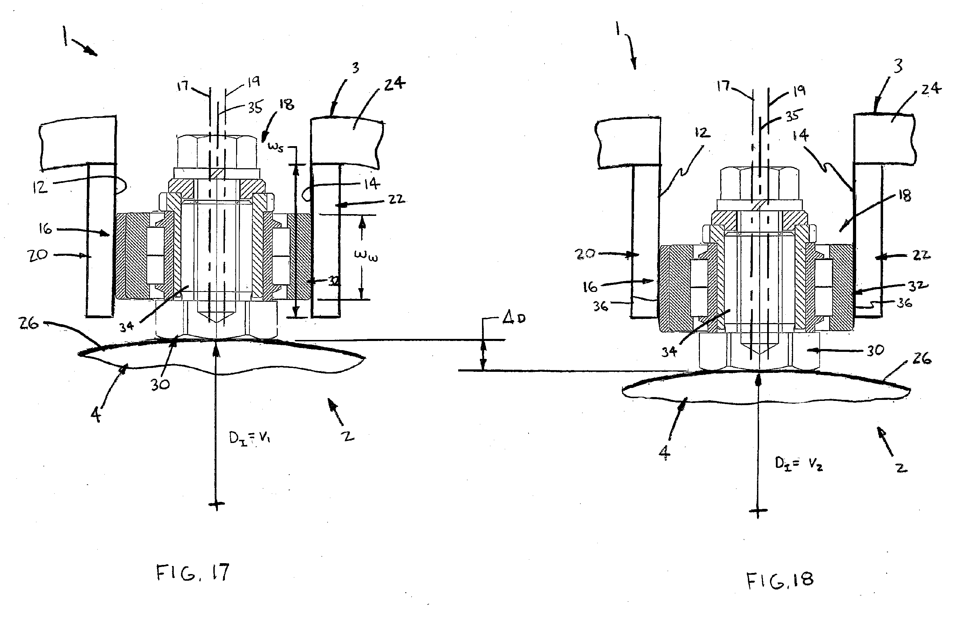

Further, each rail 20, 22 has a length L_{R} (Fig. 3) and an inner surface with a width w_{R} (Fig. 17), the rail inner surface providing the guide surface 12 or 14. The rail length L_{R} is preferably about sixty-nine inches (69") to generally accommodate the stroke length S_{L} of the presently preferred screw actuator 5, which is about fifty inches (50"). Thereby, the rollers 14, 16 have a sufficient guide surface length to traverse during the piston stroke. Also, the inner surface width w_{R} is preferably at least one eighth of an inch (0.125"), and most preferably of about two and one-quarter inches (2.25"), for reasons discussed below.

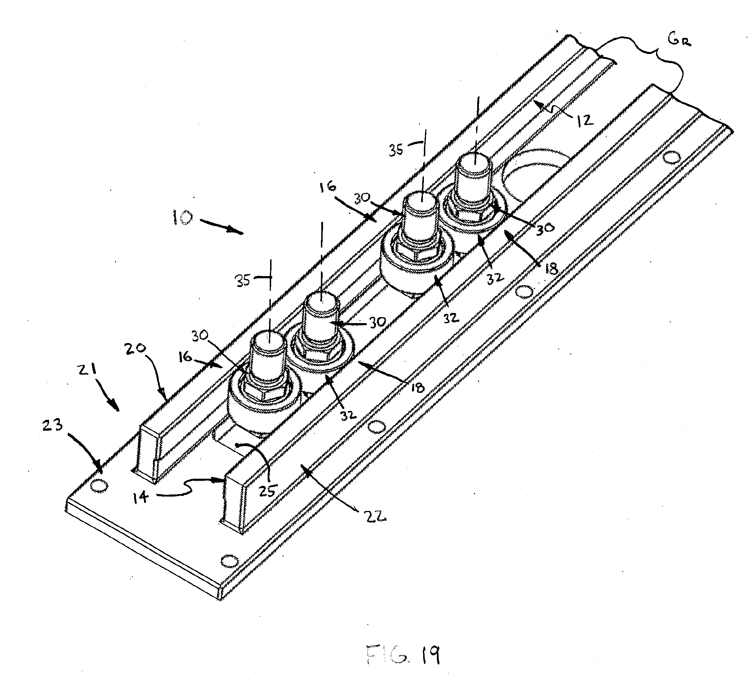

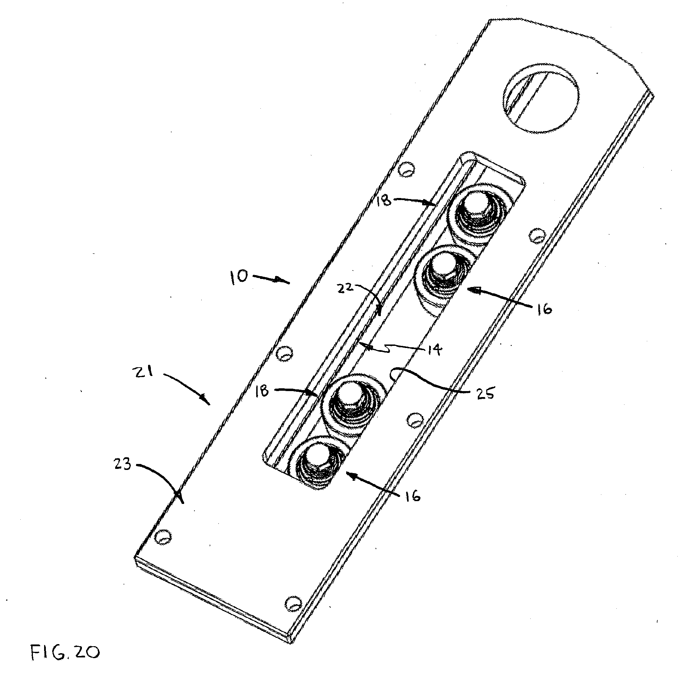

Referring to Figs. 19 and 20, the guide rails 20, 22 are preferably provided by a guide assembly 21 that includes an elongated, generally rectangular plate 23 to which the rails 20, 22 are attached. The plate 23 preferably has a generally rectangular access opening 25 to permit access to the first and second rollers 16, 18. As such, the first member 1 with the assembly 21 and the second member 2 are preferably assembled together, and then the first and second rollers 16, 18 are installed on the second member 2 through the access opening 25. Further, the plate 23 is mounted to the first member 1 by any appropriate means (e.g., bolts, rivets, weldment, etc.) so as to position the guide surfaces 12, 14 at a desired location on the first member 1/casing 24. With such an assembly 21, the guide surfaces 12, 14 can be readily provided on a commercially available actuator member 1 or 2, thus enabling retrofitting of the anti-rotation device 10 to previously known actuator devices.

Although preferably formed as described above, the guide surfaces 12, 14 may be provided by two separate rails attached directly to the first member 1, by integral shoulder surfaces of the first member 1, or by any other appropriate means. Also, the guide surfaces 12, 14 may be alternatively positioned so as to face in opposing directions away from each other, with the first roller(s) 16 located outside of and adjacent to the first rail 20 and the second roller(s) 18 located outside of an adjacent to the second rail 22. For example, the guide surfaces 12, 14 may be provided by opposing, outwardly facing surfaces of two parallel rails, a separate rectangular block, integral shoulder surfaces of the first member 1, etc., with the rollers 16, 18 being positioned outside of the rails, block, shoulders, etc.

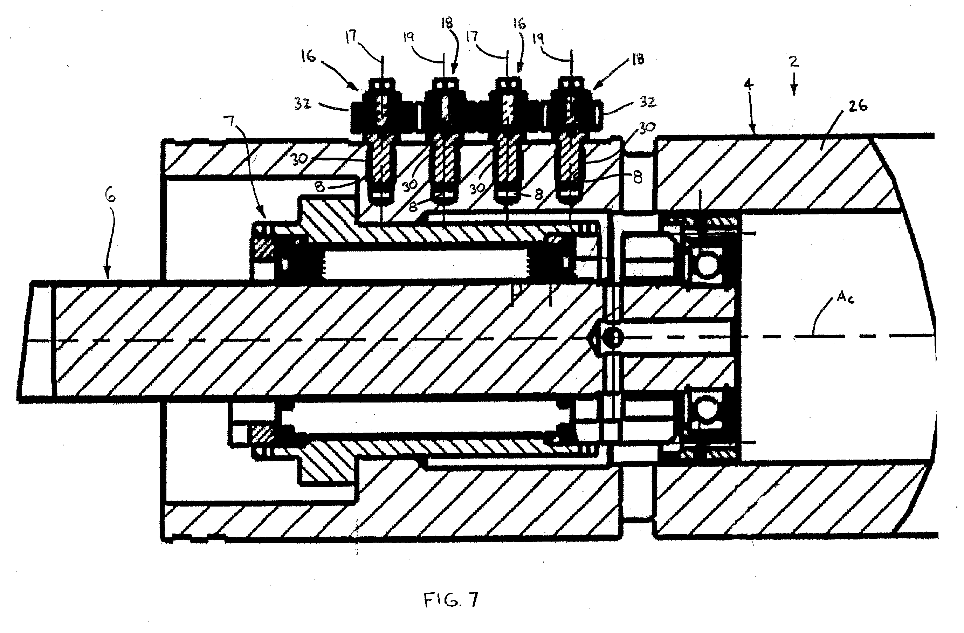

Referring now to Figs. 6-14, each one of the first and second rollers 16, 18 preferably includes a base 30 connected with the second member 2 and a wheel 32 rotatably coupled with the base 30. The base 30 includes an inner, generally cylindrical mounting portion 31 with an external thread 33 and an outer, generally cylindrical shaft portion 34 extending from the mounting portion 31 and having an outer circumferential surface 37 and a threaded bore 43. A centerline 35 extends generally centrally through the mounting and shaft portions 31, 34. The external thread 33 of the base mounting portion 31 is configured to threadably engage a threaded hole 8 (Fig. 7) in the second member 2 to connect the roller 16 or 18 with the member 2. As best shown in Fig. 8, the bases 30 of all of the first and second rollers 16, 18 are preferably spaced apart generally along a single line 1_{R} extending generally parallel to the central axis A_{C}, with the wheels 32 of the first rollers 16 being offset toward the first guide surface 12 and the wheels 32 of the second rollers 18 being offset toward the second guide surface 14, in the manner described below.

Further, each wheel 32 is rotatably mounted about the associated base shaft portion 34 and has an outer circumferential surface 36. The wheel outer surface 36 preferably has an axial thickness or width w_{W} (Fig. 17) of at least one eighth of an inch (0.125"), most preferably about one inch (1"). Also, each outer surface 36 is preferably partially spherical (i.e., as opposed to substantially cylindrical) to accommodate variation of the roller axis 17 or 19 from substantial perpendicularity to the central axis A_{C}. Each wheel 32 is rollingly disposed against an associated one of the first and second guide surfaces 12 or 14, and each roller 16, 18 traverses at least a substantial portion of the length L_{R} of each rail 20, 22 during displacement of the movable member 1 or 2, as depicted in Figs 3 and 4. Due to the mating contact between the wheel outer surfaces 36 with a width w_{W} and the associated guide surface 12 or 14 with a width w_{S}, the guide surfaces 12, 14 and the rollers 16, 18 have a "radial degree of freedom" due to a range of overlap between the mating surfaces 12/36 and 14/36. This radial degree of freedom enables the anti-rotation device 10 to function as intended (e.g., without binding) even when there is a variation in the radial dimensions of the first member 1 and/or the second member 2.

For example, the second, inner member 4 may taper along the central axis A_{C} such that the inner member diameter D_{I} decreases from a first value v₁ when the rollers 16, 18 are at the first position M₁ (see Figs. 5 and 17) to a second, lesser value v₂ when the rollers 16, 18 are at the second position M₂ (see Figs. 4 and 18). In such a case, the wheels 32 will slide radially inwardly by a distance Δ_{D} during linear displacement between the two positions M₁, M₂ while still maintaining contact with the guide surfaces 12, 14. In contrast, prior art anti-rotation devices using rolling balls will bind under such conditions.

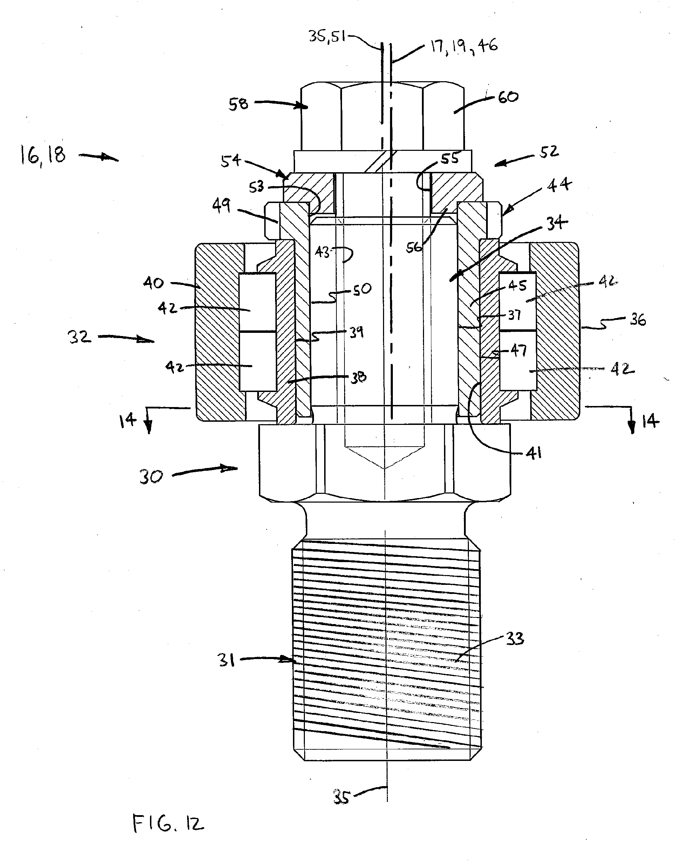

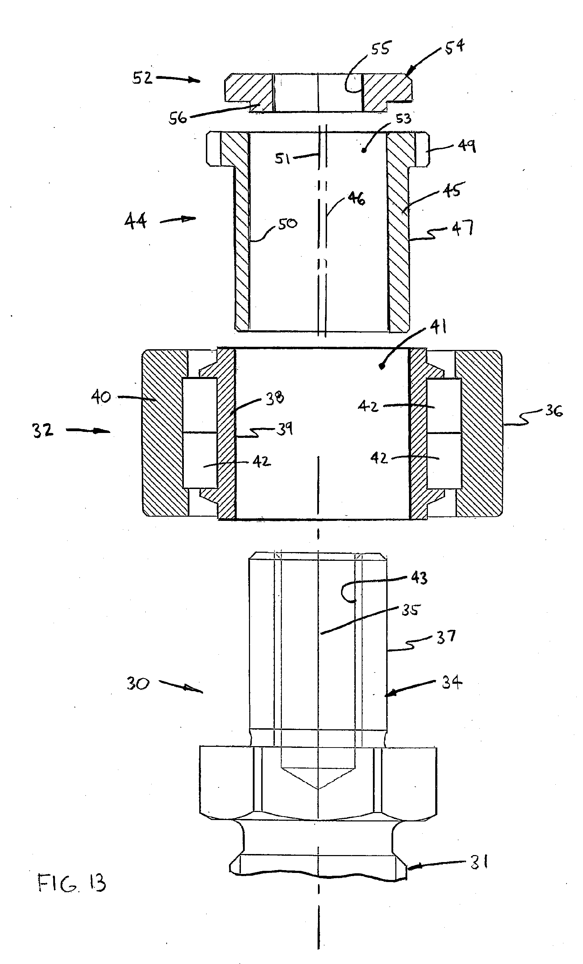

As best shown in Figs. 12 and 13, each wheel 32 preferably includes an inner ring 38, an outer ring 40 and a plurality of rollers 42 disposed between the inner and outer rings 38, 40, respectively. The inner ring 38 has an inner circumferential surface 39 defining a central bore 41, the outer ring 40 provides the wheel outer surface 36, and the rollers 42 rotatably couple the two rings 38, 40. Most preferably, the wheel 32 is a needle bearing, but may be any other type of rolling element bearing, a plain bearing, a solid wheel (e.g., a caster wheel), a spoked wheel or any other appropriate type of wheel capable of functioning generally as described herein.

Referring now to Figs. 12-14, each roller 16, 18 preferably further includes a coupler 44 having a generally circular body 45 with a centerline 46 providing the roller axis 17 or 19, an outer circumferential surface 47 extending about the centerline 46, and a circular flange 49 extending radially outwardly from an upper portion of the body 46. The coupler 44 further has an inner circumferential surface 50 defining an offset bore 53 with a central axis 51 spaced from, and extending generally parallel to, the body centerline 46. The coupler offset bore 53 is configured to receive the base shaft portion 34 such that the bore axis 51 is generally coaxial with the shaft centerline 35. Further, the central bore 41 of the wheel inner ring 38 is configured to receive the coupler 44 so as to connect the wheel 32 with the base 30. At least a portion of the wheel 32 is rotatable about the coupler body centerline 46 (i.e., the roller axis 17, 19), preferably the outer ring 40 and the rollers 42. Furthermore, the coupler 44 is fixedly angularly displaceable (e.g., manually rotatable) about the base shaft portion 34, such that the coupler inner surface 50 slides against the base shaft outer surface 37, so as to enable adjustment of the position of the roller axis 17 or 19 with respect to the associated guide surface 12 or 14.

Referring again to Figs. 12 and 13, each roller 16, 18 also preferably includes a retainer 52 configured to releasably retain the coupler 44 with respect to the base shaft portion 34. Preferably, the retainer 52 includes a circular plate 54 and a threaded rod 58 (Fig. 12) with a head 60 (e.g., a bolt). The retainer plate 54 has a central bore 55 and an annular shoulder 56 extending about the bore 55 and sized to fit within the coupler bore 53. The threaded rod 58 extends through the plate bore 55 and threadably engages with the threaded bore 43 of the base shaft portion 34 so as to clamp the rod head 60 against the plate 54 and the coupler flange 49 between the plate 54 and the wheel inner ring 38, as best shown in Fig. 12. Thereby, the coupler 44 is prevented from angularly displacing or turning about the base shaft portion 34, which fixes the position P*_{XX}* (i.e., P₁₁, P₁₂, P₂₁ and P₂₂) of the particular roller axis 17 or 19 with respect to the associated guide surface 12, 14, respectively.

When properly positioned relative to the guide surfaces 12, 14, each of the roller wheels 32 rolls along the associated guide surface 12, 14 without excessive friction or binding. The roller axis 17, 19 should be spaced a perpendicular spacing distance sₓₓ (i.e., s₁₁, etc.) from the associated guide surface 12 or 14 that is approximately equal to or slightly less than the radius R_{W} of the wheel 32, as shown in Figs. 10 and 11. As such, the outer surface 36 of each wheel 32 contacts the guide surface 12, 14 with a sufficient normal force to generate a frictional force, and thereby a torque, to rotate the wheel 32 during relative linear motion between the roller 16 or 18 and the associated guide surface 12, 14, respectively. If the spacing distance sₓₓ is too great, the displaceable member 1 or 2 may angularly displace or turn about the central axis A_{C} to a certain extent, and lead to excessive wear on the actuator components. Alternatively, if the spacing distance sₓₓ is too small, the wheel 32 could bind or jam against the guide surface 12 or 14 and potentially hinder intended linear displacement between the first and second members 1, 2.

The present anti-rotation device 10 is clearly advantageous over previously known anti-rotation devices. Friction is substantially reduced in comparison to both sliding rail guide devices and devices utilizing recirculating linear ball bearings as contact is minimized to only line contact between each one of the preferred four rollers 16 and 18 and the associated guide surface 12, 14. The rollers 16, 18 are preferably adjustably mounted to ensure ideal contact conditions between each one of the rollers 16, 18 and the associated guide surface 12 or 14 regardless of any dimensional variations introduced by manufacturing tolerances. Further, the guide surfaces 12, 14 or/and the rollers 16, 18 are able to radially displace relative to the rollers 16, 18 or the surfaces 12, 14, respectively, such that contact is maintained and binding of the first and second members 1, 2 is avoided even when there are significant dimensional variations between the two members 1, 2.

It will be appreciated by those skilled in the art that changes could be made to the embodiments described above without departing from the broad inventive concept thereof. It is understood, therefore, that this invention is not limited to the particular embodiments disclosed, but it is intended to cover modifications within the spirit and scope of the present invention as generally defined in the appended claims.

## Claims

1. An anti-rotation device for preventing relative rotation between first and second members, one of the first and second members being telescopingly disposed about the other one of the first and second members and at least one of the two members being linearly displaceable along a central axis extending through each of the two members, the anti-rotation device comprising:
first and second guide surfaces provided on the first member, the two guide surfaces extending generally parallel with each other and with the central axis;
at least one first roller connected with the second member and rotatable about an axis located at a fixed position on the second member, the first roller being rollable along the first guide surface so as to prevent angular displacement between the first and second members when the displaceable one of the two members moves in a first direction along the axis; and
at least one second roller connected with the second member and rotatable about an axis located at a fixed position on the second member, the second roller being rollable along the second guide surface so as to prevent angular displacement between the first and second members when the displaceable one of the two members moves in a second, opposing direction along the axis.

2. The anti-rotation device as recited in claim 1 wherein one of:
the first member is an outer, generally tubular member and the second member is an inner member disposed coaxially within the first, outer member; and
the second member is an outer, generally tubular member and the first member is an inner member disposed coaxially within the second, inner member.

3. The anti-rotation device as recited in claim 1 wherein the first roller is adjustably mounted on the second member such that the position of the first roller axis on the second member is variable to adjust a spacing distance between the first roller axis and the first guide surface.

4. The anti-rotation device as recited in claim 3 wherein the second roller is adjustably mounted on the second member such that the position of the second roller axis on the second member is variable to adjust a spacing distance between the second roller axis and the second guide surface.

5. The anti-rotation device as recited in claim 1 wherein:
the at least one first roller includes a plurality of first rollers spaced apart generally along the central axis, each first roller being connected with the second member, rotatable about a separate axis located a discrete, fixable position on the second member and rollable along the first guide surface; and
the at least one second roller includes a plurality of second rollers spaced apart generally along the central axis, each second roller being connected with the second member, rotatable about a separate axis located a discrete, fixable position on the second member and rollable along the second guide surface.

6. The anti-rotation device as recited in claim 5 wherein at least each one of the first rollers is adjustably mounted on the second member as to vary the position of each first roller axis on the second member and adjust a spacing distance between each first roller axis and the first guide surface.

7. The anti-rotation device as recited in claim 1 wherein each one of the first and second rollers includes:
a base connected with the second member and having a generally cylindrical shaft portion; and
a wheel rotatably mounted about the base shaft portion and having an outer circumferential surface disposeable against one of the first and second guide surfaces.

8. The anti-rotation device as recited in claim 7 wherein the base has a centerline extending through the shaft portion and each one of the first and second rollers further includes a coupler having a generally circular body with a centerline providing the roller axis and a bore with a central axis spaced from the body centerline, the bore being configured to receive the base shaft portion such that the bore axis is generally coaxial with the shaft centerline, the wheel having a central bore configured to receive the coupler so as to connect the wheel with the base, at least a portion of the wheel being rotatable about the coupler body centerline and the coupler being angularly displaceable about the base shaft so as to adjust the position of the roller axis with respect to at least one of the first and second guide surfaces.

9. The anti-rotation device as recited in claim 8 further comprising a retainer configured to releasably retain the coupler with respect to the base shaft.

10. The anti-rotation device as recited in claim 8 wherein the wheel includes an inner ring, an outer ring and a plurality of rollers disposed between and rotatably coupling the inner and outer rings.

11. The anti-rotation device as recited in claim 8 wherein the base includes a mounting portion with an external thread configured to threadably engage with a threaded hole in the second member, the base shaft portion extending from the base mounting portion.

12. The anti-rotation device as recited in claim 1 wherein the first guide surface is provided by a first, generally rectangular rail and the second guide surface is provided by a second, generally rectangular rail spaced apart from the first rail, each one of the first and second rails being connected with the first member so as to extend generally parallel to central axis.

13. The anti-rotation device as recited in claim 1 wherein:
the first and second guide surfaces each generally face the other one of the first and second guide surfaces, the at least one first roller and the at least one second roller each being disposed generally between the first and second guide surfaces: and
each one of the first and second rollers has a diameter and the first and second guide surfaces are spaced apart by a spacing distance, the guide surfaces spacing distance being greater than the diameter of the first roller such that the first roller contacts the first guide surface and is spaced from the second guide surface and being greater than the diameter of the second roller such that the second roller contacts the second guide surface and is spaced from the first guide surface.

14. The anti-rotation device as recited in claim 1 wherein each one of the first and second rollers has an outer circumferential surface rollable along the guide surface, each roller outer surface having an axial width of at least 0.125 inches and the guide surface having a width of at least 0.125 inches such that each roller remains in contact with one of the guide surfaces when a distance between the guide surface and the central axis varies along the axis.

15. The anti-rotation device as recited in claim 1 wherein one of the first and second members includes a generally tubular casing configured to contain at least a portion of a screw of a screw actuator and the other one of the first and second members includes a generally tubular body configured to connect with a nut of the screw actuator.
